# EUROPEAN PATENT SPECIFICATION

(11) **EP 1 590 225 B1**
(45) Date of publication and mention of the grant of the patent: **02.04.2014**
(21) Application number: 03815694.9
(22) Date of filing: 22.12.2003
(51) Int. Cl.: B62B 9/08

(54) **LOCKING/RELEASE DEVICE**
VER- UND ENTRIEGELUNGSEINRICHTUNG
DISPOSITIF DE VERROUILLAGE/DEVERROUILLAGE

(30) Priority: 07.02.2003 IT VR20030004 U
(43) Date of publication of application: 02.11.2005
(73) Proprietor: L'Inglesina Baby S.p.A., 36077 Altavilla Vicentina (IT)
(72) Inventor: TOMASI, Ivan, I-36050 Sovizzo (IT); GORZA, Roberto, I-32032 Feltre (IT)
(74) Representative: Modiano, Micaela Nadia
(86) International application number: PCT/EP2003/014711
(87) International publication number: WO 2004/069627

(56) References cited:
- DE-U- 9 416 921
- FR-A- 2 798 638
- US-A- 4 618 033

## Description

The present invention relates to a locking/release device particularly suitable for pushchairs and prams for young children.

During normal use of pushchairs and prams it is necessary to allow the user (by using locking/release devices constituted for example by actuation lever systems) to simply and effectively lock devices supported by the wheels, such as for example braking devices or castering devices (i.e., capable of ensuring or preventing castering motion of the wheel or set of wheels in the case of twin wheels).

Currently, devices used to lock rotation of the wheels about their own axis (braking devices) or used to prevent castering motion are generally constituted by an actuation lever that is normally pivoted to a supporting structure of the wheel or set of wheels, which supports an engagement pin that is designed to engage, if the user acts on such lever, within a seat formed on a ring that is rigidly coupled to the wheel rotation axis in the case of braking devices, or in a castering locking seat in the case of castering devices.

Although currently commercially available locking/release devices are presently widely used, they are not devoid of drawbacks.

The user, by acting on the lever to lock the device, in fact often fails to make the pin engage directly in the respective seat but makes it abut against the peripheral profile of the ring (in the case of a braking device) or of the upper edge of the support, in the case of a device for locking the castering motion.

At this point the user is in a condition in which he has to take the pressure off the lever in order to turn the wheel about its own axis or about the castering axis and try, by pressing the lever again, to insert the engagement pin within the respective seat.

FR 2 798 638 discloses a three wheeled pushchair having two braking systems wherein the user acting on a pedal provides a rotation of the braking bar in order to insert the pedal into the seats defined on a wheel gear associated with the wheel. The end of braking bar, which is not coupled to the pedal, is pivoted on a supporting member rigidly fixed to the pushchair frame. A spring is coupled between the supporting member and the end of the braking bar which is connected to the pedal. In order to reach the locking of the wheel, the user acts on the pedal against the action of the spring to insert the pedal into the seat of wheel gear. To return to the release position the user disengages the pedal from the seat and the spring thus provides a movement which moves away the pedal from gear wheel. The drawback of this mechanism is that, if the engagement of pedal into the seat of gear wheel fails, the user has to act on the pedal again.

The aim of the present invention is to provide a locking/release device that is capable of eliminating or at least reducing significantly the drawback suffered by known devices.

Within this aim, an object of the invention is to provide a locking/release device that has a low production cost so as to be advantageous also from the economical standpoint.

This aim and this and other objects that will become better apparent hereinafter are achieved by a locking/release device according the present invention, as defined in claim 1.

### Brief Description of the Drawings

Further features and advantages of the present invention will become better apparent from the following detailed description of some currently preferred examples of embodiments, given merely by way of non-limiting example with reference to the accompanying drawings, wherein:
Figure 1 is a side elevation view of a locking/release device according to the invention, associated with a braking ring with the lever system in the release position;
Figure 2 is a side view, similar to Figure 1, in which the lever system is in the abutment position;
Figure 3 is a side view, similar to Figures 1 and 2, in which the lever system is in the locking position;
Figure 4 is a sectional elevation view of a locking/release device associated with a castering device in which the lever system is in the release position;
Figure 5 is a view, similar to Figure 4, in which the lever system is in the abutment position;
Figure 6 is a view, similar to Figures 4 and 5, in which the lever system is in the locking position; and
Figure 7 is a perspective view of a trap spring according to the invention.

### Ways of carrying out the Invention

In the examples of embodiments that follow, individual characteristics, given in relation to specific examples, may actually be interchanged with other different characteristics that exist in other examples of embodiments.

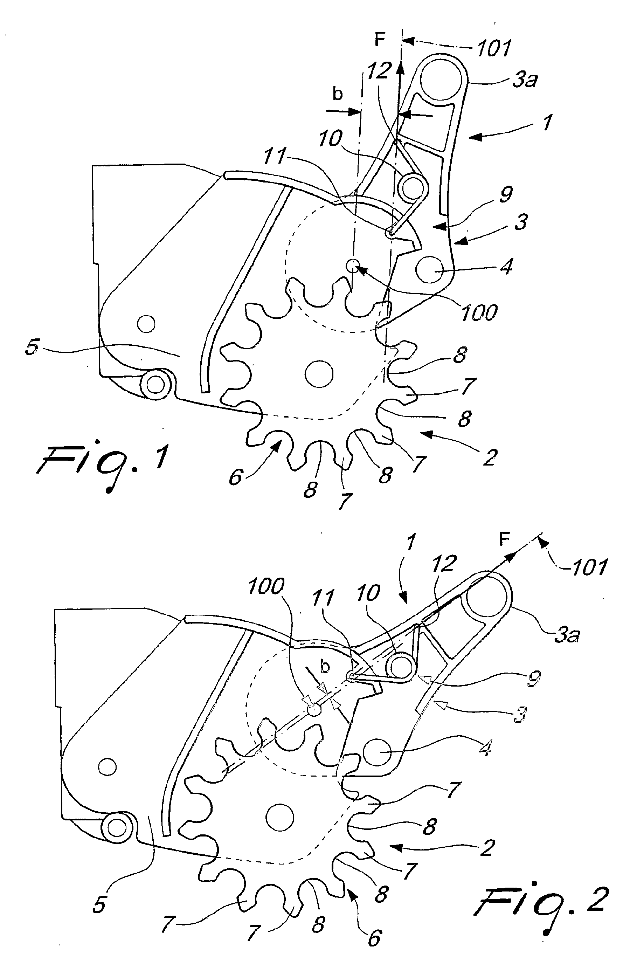

With reference to Figures 1 to 3, a locking/release device, generally designated by the reference numeral 1, according to the invention, can be associated with a braking device or brake 2.

Such locking/release device is constituted by an actuation lever system 3 that supports engagement means such as for example a pin 4.

The actuation lever system 3 is articulated to a supporting structure 5, which in turn supports the wheel or wheels, provided with at least one locking element rotationally rigidly coupled thereon; said locking element is accordingly movable with respect to the supporting structure 5.

In the example shown in figures 1-3, the locking element is constituted by a braking ring 6.

The braking ring 6 (and more generally the locking element) has at least one abutment region 7 (constituted in the illustrated example by the teeth of the braking ring 6) and at least one engagement seat 8 (constituted in this case by the gaps formed between two successive teeth),

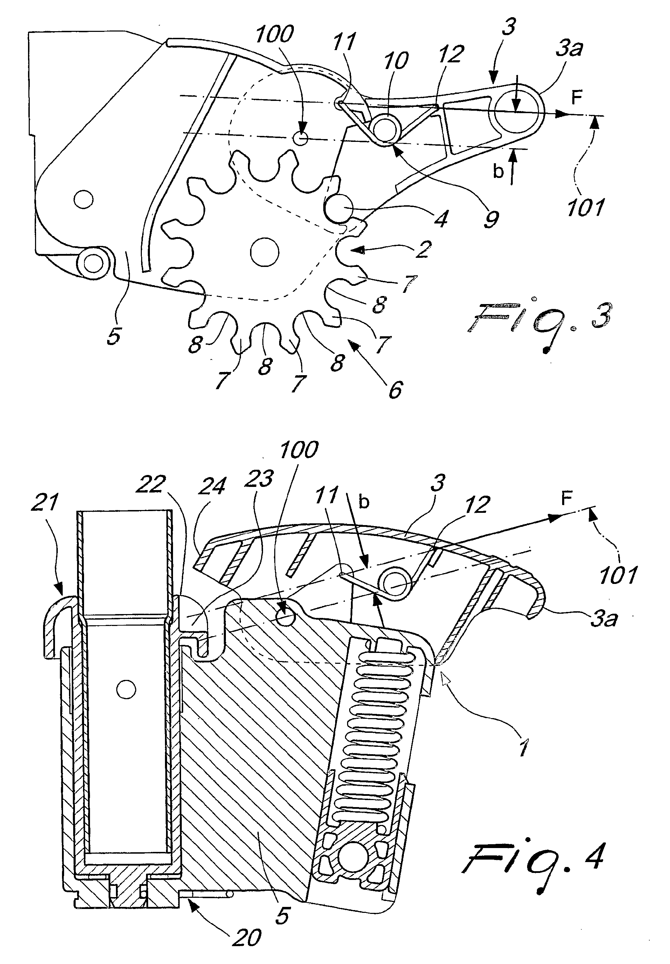

The actuation lever system 3 is mounted rotatable about a pivoting axis 100 and is adapted to pass, under actuation by the user, from a release position (shown in Figure 1), in which the pin 4 is disengaged from the engagement seat or seats 8, to a position for locking the locking element, which is constituted in this case by the braking ring 6 (shown in Figure 3) and in which the pin 4 is accommodated within at least one of the engagement seats 8 provided in said locking element.

In particular, the lever system 3 may also assume an abutment position (shown in Figure 2), in which the pin 4 (or more generally the engagement means) abuts against at least one portion of at least one of the abutment regions 7.

According to the invention, elastic loading means 9, such as for example a trap spring 10, as shown in the figures, act between the supporting structure 5 and the actuation lever system 3.

In particular, the trap spring 10 is coupled, at a first substantially end portion thereof, to a first coupling portion 11 that is supported by the supporting structure 5 and, at the other opposite substantially end portion, to a second coupling or, equivalently, abutment portion 12 that is supported by the actuation lever system 3.

It is evident that the trap spring 10 (and equivalently other elastic loading means), if loaded (for example by moving the substantially end portions mutually closer) applies a force, designated by the letter F, to the actuation lever system 3, which acts along a thrust axis 101 formed by the straight line that passes through the first coupling portion 11 and through the second coupling or abutment portion 12.

As shown by the figures, the thrust axis 101 rotates about the first coupling portion 11 as a consequence of the rotation of the actuation lever system 3 about a pivoting axis 100.

The force F therefore generates a torque for the rotation of the actuation lever system 3 with respect to the pivoting axis 100 depending on an arm (b) that is generated between the thrust axis 101 and the pivoting axis 100.

It is evident, with particular reference to Figures 2 and 3, that the arrangement of the pivoting axis 100 and of the thrust axis 101 is such that when the actuation lever system 3 is in the release position such arrangement generates a torque that tends to keep the lever system 3 in said position (in the drawing, the torque generated in this position has a "counterclockwise" direction), while when the actuation lever system 3 is in the locking position, the generated torque tends to keep the pin 4 within the seat 8 (and therefore the torque generated in this position has a "clockwise" direction).

According to the invention, the arrangement is such that in the abutment position (see Figure 2), the torque generated by the force F tends to press the pin 4 against the abutment region 7, accordingly keeping the pin 4 pressed against the abutment region 7 even if the user removes the pressure from the end actuation portion 3 a of the actuation lever system 3.

This allows, by turning the wheel with which the braking ring 6 is associated, the immediate transition of the actuation lever system 3 from the abutment position to the locking position without requiring the user to act on the actuation lever system 3 again.

Obviously, in order to allow the torque generated when the lever system 3 is in the abutment condition to make the pin 4 press against the abutment region 7, the balance position determined by the position of the actuation lever system 3 in which the thrust axis 101 intersects the pivoting axis 100 must be intermediate between the abutment position and the release position; in a fully equivalent manner, one can say that the abutment position must be intermediate between the balance position and the locking position.

Reverting now to Figures 4 to 6, a locking/release device 1 according to the invention can, in a manner that is fully equivalent to what has been described above, be associated with a castering device 20, which comprises a supporting structure 5 and is rotationally coupled to a supporting bush 21 (which in this application forms the locking element at its edge that is arranged upward during use).

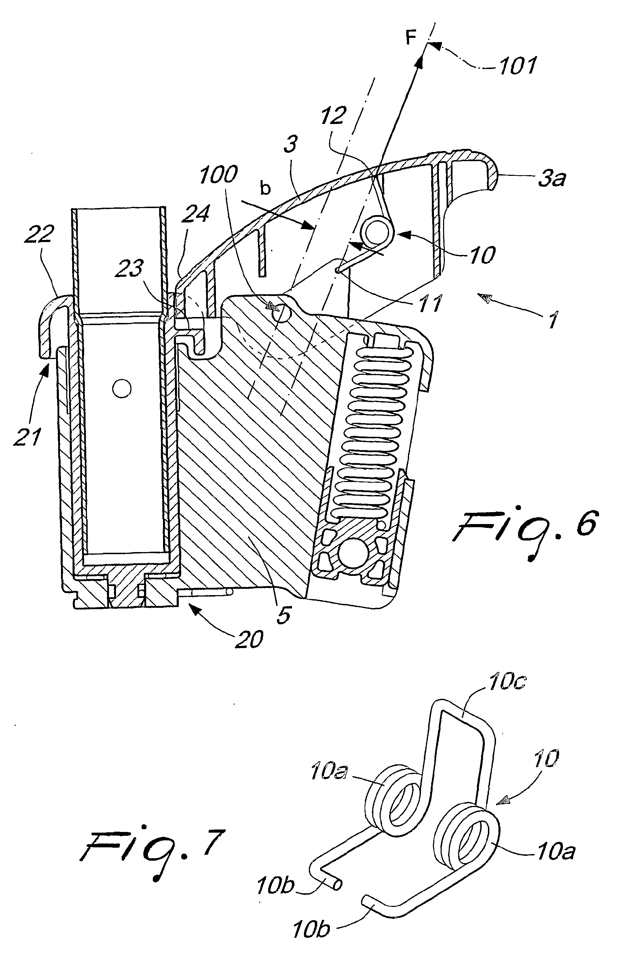

Therefore, at the edge of the supporting bush 21 that is arranged upward during use there is an abutment region 22 and there is a seat 23, in this case for locking the castering motion, in which, in the locking position (shown in Figure 6), the engagement means are accommodated; in this case, such means can be constituted by a tab 24 for engaging the actuation lever system 3.

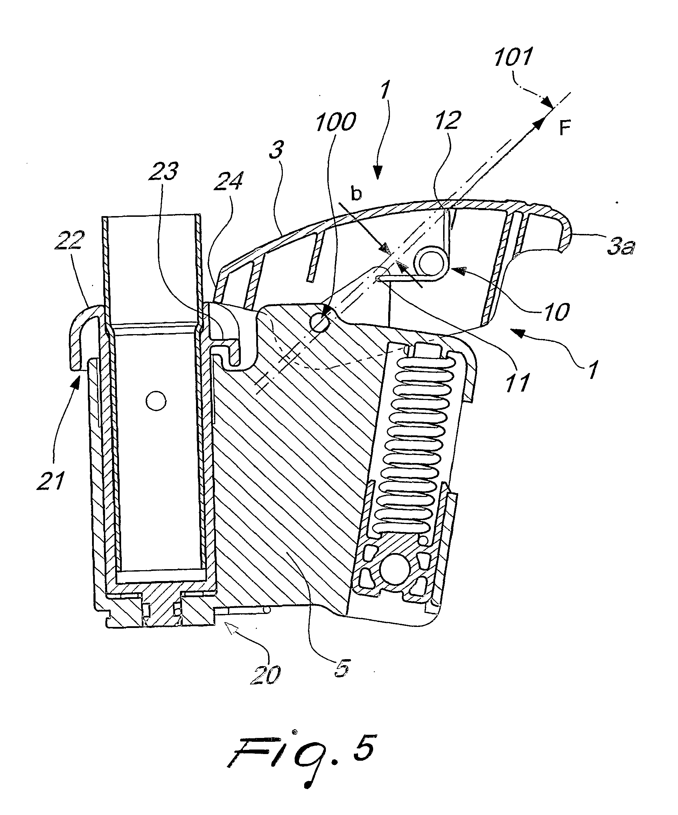

In this different case also, the pivoting axis 100 and the thrust axis 101 must be arranged so that the balance position (in which the thrust axis 101 and the pivoting axis 100 intersect) is intermediate between the abutment position (in this variation shown in Figure 5) and the release position (Figure 4); accordingly, in this case also, the abutment position must be intermediate between the balance position and the locking position.

As clearly shown in Figure 7, the trap spring 10 is constituted by two spiral coils 10a, from which a first thrust arm and a second thrust arm extend respectively, such arms having, substantially at their free ends, a respective coupling element 10b that is adapted to enter the first coupling portion 11 supported by the supporting structure 5.

Furthermore a second arm protrudes from each of the two spiral coils 10a: an abutment element 10c is provided between the end portions of the second arms, and in addition to connecting the two second arms it is adapted to abut, during use, against the second engagement or abutment portion 12 supported by the actuation lever system 3.

It has been shown that a locking/release device for pushchairs, prams or the like, according to the invention, fully achieves the intended aim and object.

All the details may further be replaced with other technically equivalent elements.

In particular, the elastic loading means can be constituted also by an axial spring that is optionally pre-compressed: in this case, it is convenient to review the arrangement of the pivoting axis 101 and of the first and second coupling portions 11 and 12.

The materials and the dimensions may be any according to requirements.

## Claims

1. A locking/release device (1) particularly for pushchairs, prams or the like, comprising an actuation lever system (3) that supports engagement means (4) and is articulated to a supporting structure (5) that can move with respect to a locking element (6), which has at least one abutment region (7) and at least one engagement seat (8), said actuation lever system (3) being mounted rotatable about a pivoting axis in order to pass from a release position, in which said engagement means (4) are disengaged from said abutment portion (7), to a locking position of said locking element (6), in which said engagement means (4) engage said at least one engagement seat (8), at least one abutment position being further provided in which said engagement means (4) abut against at least one portion of said at least one abutment region (7), **characterized in that** it comprises elastic loading means (9) which comprise a trap spring (10) that is coupled to a first coupling portion (11), which is supported by said supporting structure (5), and to a second coupling portion (12), which is supported by said actuation lever system (3), and is adapted to generate a thrust that acts along an axis of action (101) that is formed by the straight line that passes between said first coupling portion (11) and said second coupling portion (12) and that can rotate about said coupling portion (11), said action axis (101) intersecting said pivoting axis (100) in an intermediate position between said abutment position and said release position, in said abutment position the torque generated by said thrust tends to press said engagement means (4) against said at least one abutment region (7).

2. The locking/release device (1) according to claim 1, **characterized in that** it has, in the abutment position, between said action axis (101) and said pivoting axis (100), an arm that is adapted to generate a torque for pushing said engagement means (4) against said at least one portion of said at least one abutment region (7).

3. The locking/release device (1) according to one or more of the preceding claims, **characterized in that** said engagement means (4) comprise a pin.

4. The locking/release device (1) according to one or more of the preceding claims, **characterized in that** said locking element (6) comprises a meshing ring that is kinematically connected to the rotation axis of at least one wheel, said meshing ring comprising a plurality of teeth that define said at least one abutment region (7), said at least one seat (8) being provided between two adjacent teeth.

5. The locking/release device (1) according to one or more of the preceding claims, **characterized in that** said locking element (6) comprises a supporting bush (21) that supports said supporting structure (5) so that it can rotate about a castering axis.

6. The locking/release device (1) according to one or more of the preceding claims, **characterized in that** said supporting bush (21) comprises, at an edge that is arranged upward during use, said at least one abutment region (22) and said at least one seat (23).

7. The locking/release device (1) according to one or more of the preceding claims, **characterized in that** said trap spring (10) (comprises at least one spiral winding (10a) connected to a first thrust arm, which has a coupling element (10b) substantially at its free end, and to a second thrust arm, which has an abutment element (10c) substantially at its free end.

8. The locking/release device according to one or more of the preceding claims, **characterized in that** said trap spring (10) comprises two spiral windings (10a), said abutment element (10c) being adapted to connect the respective thrust arms.

9. The locking/release device (1) according to one or more of the preceding claims, **characterized in that** it is associated with a braking device (2) or with a castering device.

10. The locking/release device (1) according to one or more of the preceding claims, **characterized in that** said trap spring (10) is associated with a braking device (2) or with a castering device.

## Patentansprüche

1. Ver- und Entriegelungseinrichtung (1), insbesondere für Buggys, Kinderwägen o. dgl., ein Betätigungshebelsystem (3) umfassend, das Eingriffseinrichtungen (4) haltert und an einer Halterungsstruktur (5) angelenkt ist, die sich im Hinblick auf ein Verriegelungselement (6) bewegen kann, das mindestens einen Anlagebereich (7) und mindestens einen Eingriffssitz (8) hat, wobei das Betätigungshebelsystem (3) drehbeweglich um eine Schwenkachse angebracht ist, um von einer Entriegelungsstellung, in der die Eingriffseinrichtungen (4) vom Anlageabschnitt (7) gelöst sind, zu einer Verriegelungsstellung des Verriegelungselements (6) überzugehen, in der die Eingriffseinrichtungen (4) den mindestens einen Eingriffssitz (8) in Eingriff nehmen, wobei weiter mindestens eine Anlagestellung vorgesehen ist, in der die Eingriffseinrichtungen (4) an mindestens einem Abschnitt des mindestens einen Anlagebereichs (7) anliegen, **dadurch gekennzeichnet, dass** sie elastische Belastungseinrichtungen (9) umfasst, die eine Fangfeder (10) aufweisen, die an einen ersten Kupplungsabschnitt (11), der durch die Halterungsstruktur (5) gehaltert ist, und an einen zweiten Kupplungsabschnitt (12) angeschlossen ist, der durch das Betätigungshebelsystem (3) gehaltert ist, und dazu angepasst ist, einen Schub zu erzeugen, der entlang einer Wirkachse (101) wirkt, die durch die gerade Linie gebildet ist, die zwischen dem ersten Kupplungsabschnitt (11) und dem zweiten Kupplungsabschnitt (12) verläuft, und die sich um den Kupplungsabschnitt (11) drehen kann, wobei die Wirkachse (101) die Schwenkachse (100) in einer Zwischenstellung zwischen der Anlagestellung und der Entriegelungsstellung schneidet, wobei in der Anlagestellung das durch den Schub erzeugte Drehmoment danach strebt, die Eingriffseinrichtungen (4) gegen den mindestens einen Anlagebereich (7) zu pressen.

2. Ver- und Entriegelungseinrichtung (1) nach Anspruch 1, **dadurch gekennzeichnet, dass** sie in der Anlagestellung zwischen der Wirkachse (101) und der Schwenkachse (100) einen Arm hat, der zum Erzeugen eines Drehmoments angepasst ist, um die Eingriffseinrichtungen (4) gegen den mindestens einen Abschnitt des mindestens einen Anlagebereichs (7) zu drücken.

3. Ver- und Entriegelungseinrichtung (1) nach einem oder mehreren der vorhergehenden Ansprüche, **dadurch gekennzeichnet, dass** die Eingriffseinrichtungen (4) einen Stift aufweisen.

4. Ver- und Entriegelungseinrichtung (1) nach einem oder mehreren der vorhergehenden Ansprüche, **dadurch gekennzeichnet, dass** das Verriegelungselement (6) einen Zahneingriffskranz aufweist, der kinematisch an die Drehachse mindestens eines Rads angeschlossen ist, wobei der Zahneingriffskranz eine Vielzahl von Zähnen aufweist, die den mindestens einen Anlagebereich (7) definieren, wobei der mindestens eine Sitz (8) zwischen zwei benachbarten Zähnen vorgesehen ist.

5. Ver- und Entriegelungseinrichtung (1) nach einem oder mehreren der vorhergehenden Ansprüche, **dadurch gekennzeichnet, dass** das Verriegelungselement (6) eine Halterungsbuchse (21) aufweist, welche die Halterungsstruktur (5) so haltert, dass sie sich um eine Nachlaufachse drehen kann.

6. Ver- und Entriegelungseinrichtung (1) nach einem oder mehreren der vorhergehenden Ansprüche, **dadurch gekennzeichnet, dass** die Halterungsbuchse (21) an einem Rand, der während des Gebrauchs nach oben angeordnet ist, den mindestens einen Anlagebereich (22) und den mindestens einen Sitz (23) aufweist.

7. Ver- und Entriegelungseinrichtung (1) nach einem oder mehreren der vorhergehenden Ansprüche, **dadurch gekennzeichnet, dass** die Fangfeder (10) mindestens eine Spiralwicklung (10a) aufweist, die an einen ersten Schubarm, der ein Kupplungselement (10b) im Wesentlichen an seinem freien Ende hat, und an einen zweiten Schubarm angeschlossen ist, der ein Anlageelement (10c) im Wesentlichen an seinem freien Ende hat.

8. Ver- und Entriegelungseinrichtung (1) nach einem oder mehreren der vorhergehenden Ansprüche, **dadurch gekennzeichnet, dass** die Fangfeder (10) zwei Spiralwicklungen (10a) aufweist, wobei das Anlageelement (10c) dazu angepasst ist, die jeweiligen Schubarme zu verbinden.

9. Ver- und Entriegelungseinrichtung (1) nach einem oder mehreren der vorhergehenden Ansprüche, **dadurch gekennzeichnet, dass** sie einer Bremsvorrichtung (2) oder einer Nachlaufvorrichtung zugeordnet ist.

10. Ver- und Entriegelungseinrichtung (1) nach einem oder mehreren der vorhergehenden Ansprüche, **dadurch gekennzeichnet, dass** die Fangfeder (10) einer Bremsvorrichtung (2) oder einer Nachlaufvorrichtung zugeordnet ist.

## Revendications

1. Dispositif de blocage/déblocage (1) destiné en particulier aux poussettes, landaus ou autres équipements de même type, comprenant un système de levier de commande (3) supportant des moyens d'engagement (4) et qui est articulé par rapport à une structure de support (5) pouvant bouger par rapport à un élément de blocage (6), doté d'au moins une zone de butée (7) et d'au moins un logement d'engagement (8), ledit système de levier de commande (3) étant monté de façon à pouvoir tourner autour d'un axe de pivotement, afin de passer d'une position débloquée, dans laquelle lesdits moyens d'engagement (4) sont désengagés de ladite zone de butée (7), à une position de blocage dudit élément de blocage (6), dans laquelle lesdits moyens d'engagement (4) sont engagés dans ledit au moins un logement d'engagement (8), au moins une position de butée étant également prévue dans laquelle lesdits moyens d'engagement (4) viennent en butée contre au moins une partie de ladite au moins une zone de butée (7), **caractérisé en ce qu'**il comprend des moyens de chargement élastiques (9) comportant un ressort conique (10) couplé à une première partie d'accouplement (11), qui est supportée par ladite structure de support (5), et à une deuxième partie d'accouplement (12), supportée par ledit système de levier de commande (3), et sert à générer une poussée s'exerçant le long d'un axe de mécanisme (101) formé par la ligne droite passant entre ladite première partie d'accouplement (11) et ladite deuxième partie d'accouplement (12), et pouvant tourner autour de ladite partie d'accouplement (11), ledit axe de mécanisme (101) coupant ledit axe de pivotement (100) dans une position intermédiaire entre ladite position de butée et ladite position de déblocage, dans ladite position de butée le couple généré par ladite poussée tendant à pousser lesdits moyens d'engagement (4) contre ladite au moins une zone de butée (7).

2. Dispositif de blocage/déblocage (1) selon la revendication 1, **caractérisé en ce qu'**il comporte, en position de butée, entre ledit axe de mécanisme (101) et ledit axe de pivotement (100), un bras adapté pour générer un couple visant à pousser lesdits moyens d'engagement (4) contre ladite au moins une partie de ladite au moins une zone de butée (7).

3. Dispositif de blocage/déblocage (1) selon une ou plusieurs des revendications précédentes, **caractérisé en ce que** ledit moyen d'engagement (4) comporte une clavette.

4. Dispositif de blocage/déblocage (1) selon une ou plusieurs des revendications précédentes, **caractérisé en ce que** ledit élément de blocage (6) comprend une bague entrelacée cinématiquement raccordée à l'axe de rotation d'au moins une roue, la bague entrelacée comprenant une pluralité de dents qui définissent ladite au moins une zone de butée (7), ledit au moins un logement (8) étant placé entre deux dents adjacentes.

5. Dispositif de blocage/déblocage (1) selon une ou plusieurs des revendications précédentes, **caractérisé en ce que** ledit élément de blocage (6) comprend une douille de support (21) supportant ladite structure de support (5) de façon à pouvoir tourner autour d'un axe orientable.

6. Dispositif de blocage/déblocage (1) selon une ou plusieurs des revendications précédentes, **caractérisé en ce que** ladite douille de support (21) comprend, sur le bord se trouvant vers le haut pendant l'utilisation, ladite au moins une zone de butée (22) et ledit au moins un logement (23).

7. Dispositif de blocage/déblocage (1) selon une ou plusieurs des revendications précédentes, **caractérisé en ce que** ledit ressort conique (10) comporte au moins une spirale (10a) raccordée à un premier bras de poussée, doté d'un élément d'accouplement (10b) placé essentiellement sur son extrémité libre, et un deuxième bras de poussée, doté d'un élément de butée (10c) placé essentiellement sur son extrémité libre.

8. Dispositif de blocage/déblocage selon une ou plusieurs des revendications précédentes, **caractérisé en ce que** ledit ressort conique (10) comporte deux spirales (10a), ledit élément de butée (10c) étant adapté pour raccorder les bras de poussée respectifs.

9. Dispositif de blocage/déblocage (1) selon une ou plusieurs des revendications précédentes, **caractérisé en ce qu'**il est associé à un dispositif de freinage (2) ou à un dispositif orientable.

10. Dispositif de blocage/déblocage (1) selon une ou plusieurs des revendications précédentes, **caractérisé en ce que** ledit ressort conique (10) est associé à un dispositif de freinage (2) ou à un dispositif orientable.
